Europäisches Patentamt

European Patent Office

Office européen des brevets

(11) Veröffentlichungsnummer: **0 429 926 A2**

# EUROPÄISCHE PATENTANMELDUNG

(21) Anmeldenummer: 90121531.9

(22) Anmeldetag: 10.11.90

(51) Int. Cl.5: **H04N 9/84**

(30) Priorität: 30.11.89 DE 3939520

(43) Veröffentlichungstag der Anmeldung:
05.06.91 Patentblatt 91/23

(84) Benannte Vertragsstaaten:
AT BE DE ES FR GB IT NL Patentblatt 00/1

(71) Anmelder: **Nokia Unterhaltungselektronik (Deutschland) GmbH**
**Östliche Karl-Friedrich-Strasse 132**
**W-7530 Pforzheim(DE)**

(72) Erfinder: **Reime, Gerd**
**Friedensstrasse 88**
**W-7542 Schömberg 4(DE)**

(54) **Schaltung zum Rückgewinnen des Chroma-Signales.**

(57) Eine Schaltung zum Rückgewinnen des Chroma-Signales aus einem Lesesignal, das von einem Band mit benachbarten Schrägspuren gelesen wird, weist in bekannter Weise eine Schaltungsanordnung (11) zum Abtrennen eines Chroma-Rohsignales (S1) aus dem Lesesignal, ein 2H-Verzögerungsglied (49) und ein Addierglied (50) auf, zum Addieren eines jeweiligen unverzögerten Chroma-Rohsignales und eines jeweiligen 2H-verzögerten Chroma-Rohsignales, wodurch ein Additionssignal (S2) gebildet wird.

Zusätzlich sind ein Subtrahierglied (12), eine Schwellenwertschaltung (13) und ein zweites Addierglied (14) vorhanden. Das Subtrahierglied subtrahiert das unverzögerte und das verzögerte Chroma-Rohsignal voneinander, wodurch ein Differenzsignal (S3) gebildet wird. Dieses wird nach Durchlaufen der Schwellenwertschaltung, wobei ein entstörtes Signal (S4) erhalten wird, durch das zweite Addierglied zum Additionssignal (S2) addiert. Das bei dieser Addition gebildete Signal ist ein Chroma-Signal ohne Übersprechstörungen und ohne Farbfehler an vertikalen Farbübergängen.

Fig. 1

## SCHALTUNG ZUM RÜCKGEWINNEN DES CHROMA-SIGNALES

TECHNISCHES GEBIET

Die Erfindung betrifft eine Schaltung zum Rückgewinnen des Chroma-Signales aus einem Lesesignal, das von einem Band mit benachbarten Schrägspuren gelesen wird.

STAND DER TECHNIK

Eine übliche derartige Schaltung, wie sie in fast allen Videorecordern verwendet wird, weist folgende Merkmale auf:
- eine Schaltungsanordnung zum Abtrennen eines Chroma-Rohsignals aus dem Lesesignal,
- ein 2H-Verzögerungsglied, dem das Chroma-Rohsignal zugeführt wird, und
- ein Addierglied zum Addieren eines jeweiligen unverzögerten Chroma-Rohsignales und eines jeweiligen 2H-verzögerten Chroma-Rohsignales, wodurch ein Additionssignal gebildet wird.

Beim Stand der Technik wird das Additionssignal als Chroma-Signal weiterbenutzt.

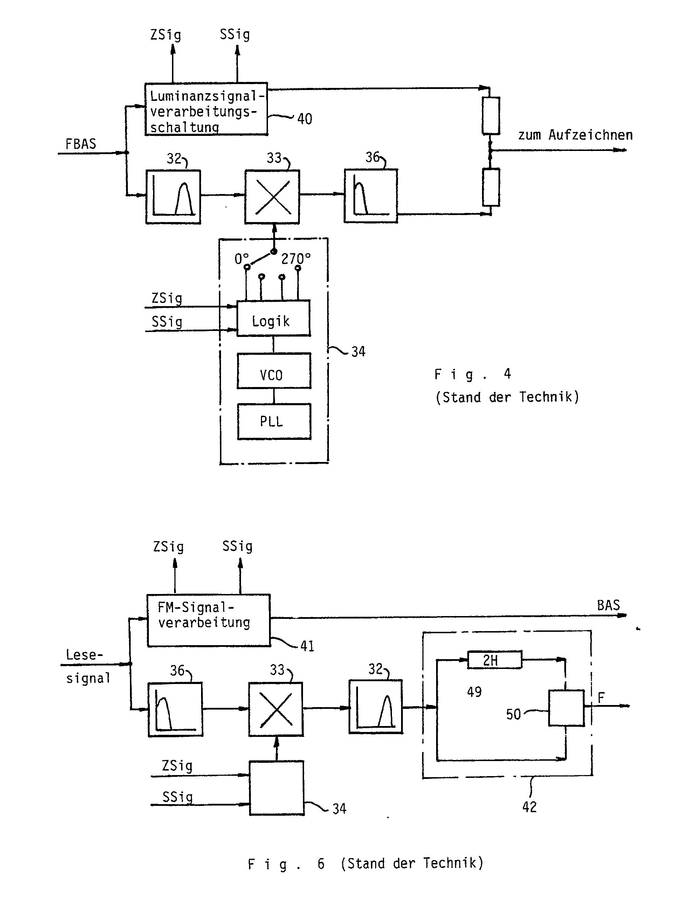

Der vorstehend zitierte Stand der Technik wird, obwohl er zum Basiswissen eines jeden Fachmanns gehört, im folgenden anhand von Fig. 4 - 9 veranschaulicht, um hierdurch die Grundlage für das Verständnis der Erfindung zu schaffen. In diesen Figuren zeigt Fig. 4 eine Aufzeichnungsschaltung und Fig. 6 eine Wiedergabeschaltung. Diese Schaltungen werden nur kurz erläutert.

Der Aufzeichnungsschaltung wird ein FBAS-Signal zugeführt, das einerseits einer Luminanzsignal-Verarbeitungsschaltung 40 und andererseits einer Chroma-Signal-Verarbeitungsschaltung zugeführt wird, die einen Hochpaß 32, einen Mischer 33 mit zugehöriger Mischfrequenzschaltung 34 und einen Hochpaß 36 aufweist. Die Ausgangssignale von der Luminanzsignal-Verarbeitungsschaltung 40 und von der Chroma-Signal-Verarbeitungsschaltung werden über ein Widerstandsnetzwerk addiert und das addierte Signal wird einem Aufzeichnungskopf zugeführt.

Die Mischfrequenzschaltung 34 verfügt über eine Logik 35, die abhängig von Werten eines Spursignales SSig und eines Zeilensignales ZSig für eine Phasenverschiebung des Mischsignales sorgt. Das Spursignal und das Zeilensignal werden von der Luminanzsignal-Verarbeitungsschaltung zur Verfügung gestellt. Die Art der erzeugten Phasenverschiebung wird nun anhand von Fig. 5 erläutert.

Fig. 5 zeigt einen Ausschnitt aus nebeneinander liegenden Schrägspuren (in Fig. 5 untereinander eingezeichnet) A, B, C, D und E. In jeder Spur ist Information für viele Zeilen eines Bildes, in der Regel eines Halbbildes, aufgezeichnet. In jeder Spur sind fünf aufeinanderfolgende Zeilen willkürlich herausgegriffen, die mit 1, 2, 3, 4 und 5 bezeichnet sind. In den Spuren A, C und E dreht die Phase von Zeile zu Zeile jeweils um 90°. Es handelt sich, wie bei allen im folgenden erwähnten Phasenbeziehungen, um die Phase in bezug auf das Burstsignal. In den Spuren B und D ist die Phasenlage für alle Zeilen jeweils gleich, wobei sich aber die Phasenlage in Spur D um 180° von der Phasenlage in Spur B unterscheidet, was jedoch nicht zwingend erforderlich ist.

Zum Rückgewinnen des Chroma-Signals aus einem Lesesignal, wie es von einem Wiedergabekopf von einem Band mit Schrägspuren gelesen wird, wird die Wiedergabeschaltung gemäß Fig. 6 verwendet. Sie verfügt über eine FM-Signal-Verarbeitungsschaltung 41 und eine Chromaträgersignal-Verarbeitungsschaltung mit einem Tiefpaß 48, einem Mischer 33 mit zugehöriger Mischfrequenzschaltung 34 und einem Hochpaß 32. Der Mischer arbeitet so, daß er dann, wenn die Signale von einer Spur eintreffen, bei der die Phasenlage des Chroma-Signales von Zeile zu Zeile dreht, die jeweilige Phasendrehung rückgängig macht, so daß das vom Hochpaß 32 ausgegebene Chroma-Rohsignal für alle Zeilen einer Spur dieselbe Phasenlage des Chroma-Signales aufweist.

Das Chroma-Rohsignal, wie es vom Hochpaß 32 ausgegeben wird, wird durch ein Kammfilter 42 verarbeitet, das ein 2H-Verzögerungsglied 49 und ein Additionsglied 50 aufweist. Letzteres addiert das jeweilige unverzögerte und das jeweilige verzögerte Chroma-Rohsignal zu einem Additionssignal und gibt dieses als Chroma-Signal aus. Es werden also z. B. die Signale B1 und B3 addiert. Diese Signale enthalten Übersprechsignale von den Zeilen A1 bzw. A3. Im Additionssignal heben sich die Übersprechanteile auf. Werden Signale in Spur C gelesen, ist zu beachten, daß die Phasen der aus Spur C gelesenen Chroma-Signale so durch den Mischer 33 gedreht wurden, daß die Phase für alle Zeilen in Spur C gleich ist. Es sind dann aber die Phasenlagen der Übersprechsignale, wie sie aus teilweisem Mitlesen von Spur B herrühren, von Zeile zu Zeile um jeweils 90° gedreht, also für übernächste Zeilen um 180° gedreht. Dies führt dazu, daß dann, wenn das unverzögerte Signal C3 zum verzögerten Signal C1 addiert wird, sich die Übersprechsignale B3 und B1 auslöschen.

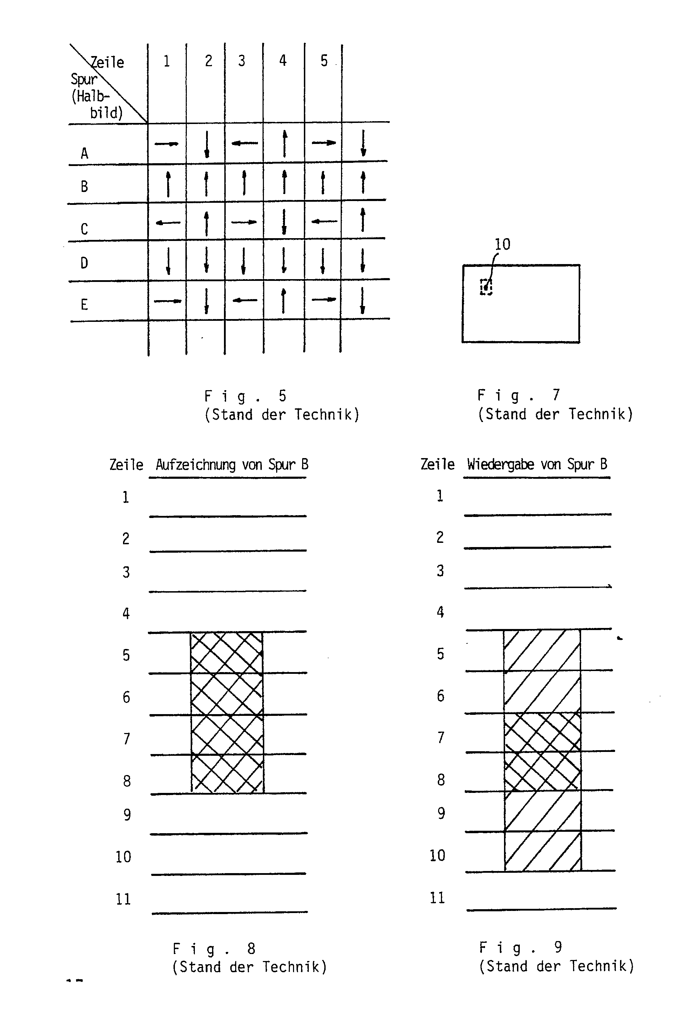

Das bekannte Kammfilter 42 sorgt also dafür, daß Übersprechstörungen beseitigt werden. Die Arbeitsweise der Schaltung hat jedoch zur zwingenden Folge, daß vertikale Farbübergänge verwaschen werden und daß die untere Begrenzung von Farbflächen um zwei Zeilen nach unten gegenüber der Lage im aufgezeichneten Bild verschoben wird. Dies wird nun anhand der Fig. 7 - 9 näher erläutert.

Fig. 7 zeigt schematisch einen weißen Bildschirm mit einem farbigen Fleck 10, z. B. einem roten Fleck. Es handle sich um ein Halbbild, wie es beim Lesen von Spur B erzeugt wird.

In den Fig. 8 und 9 ist der rote Fleck 10 vergrößert dargestellt, zusammen mit einem Umgebungsbereich, der in Fig. 7 durch eine gestrichelte Linie um den Fleck 10 angedeutet ist. Die Fig. 8 und 9 umfassen eine kurze Länge von jeweils 11 Zeilen.

Bei dem in Spur B aufgezeichneten Bild gemäß Fig. 8 sind die Spuren 1 - 4 und 9 - 11 durchgehend weiß, während sich in den Zeilen 5 - 9 der rote Fleck 10 über einen Teil der Länge der Zeilen erstreckt.

Fig. 9, die das Bild darstellt, das beim Auslesen des in Spur B aufgezeichneten Signales gewonnen wird, zeigt, daß im wiedergegebenen Bild nur noch die Spuren 1 - 4 durchgehend weiß sind. In den Zeilen 5 und 6 sowie 9 und 10 liegen rosa Bereiche und nur noch in den Zeilen 7 und 8 rote Bereiche vor. Der wiedergegebene rote Fleck 10' erstreckt sich also über insgesamt 6 Zeilen und ist am oberen und unteren Ende rosa statt rot. Dies ist durch die oben erläuterte Addition verzögerter und unverzögerter Chroma-Rohsignale bedingt, die dazu führt, daß an den Übergängen Signale "rot" und "weiß" zu "rosa" gemischt werden.

Es ist offensichtlich, daß die eben beschriebene Farbflächenverfälschung vom Benutzer als sehr nachteilig empfunden wird. Es bestehen daher seit Jahren Bemühungen, eine Schaltung anzugeben, die dazu in der Lage ist, Übersprechsignale zu kompensieren, ohne daß dies zu einem Vergrößern von Farbflächen in vertikaler Richtung und zu einem Verwaschen von vertikalen Farbübergängen führt.

DARSTELLUNG DER ERFINDUNG

Die erfindungsgemäße Schaltung nutzt die eingangs genannten Schaltungskomponenten und darüber hinaus die folgenden Komponenten:
- ein erstes Subtrahierglied zum Subtrahieren des jeweiligen unverzögerten und des jeweiligen 2H-verzögerten Chroma-Rohsig nals voneinander, wodurch ein Differenzsignal gebildet wird,
- eine Schwellenwertschaltung, die das Differenzsignal erhält und die nur solche Anteile desselben durchläßt, die einen vorgegebenen Schwellenpegel überschreiten, wodurch ein entstörtes Signal gebildet ist, und
- ein zweites Addierglied zum Addieren des Additionssignales und des entstörten Signales, wodurch das Chroma-Signal gebildet wird,
- wobei die Schaltung so dimensioniert ist, daß die Amplituden des Additionssignales und des Differenzsignales an Übergängen "Weiß-Farbe" im wesentlichen gleich sind.

Die erfindungsgemäße Schaltung ändert also nicht etwa die bekannte Schaltung, sondern fügt dieser weitere Komponenten hinzu, um nicht mehr unmittelbar das Additionssignal vom Kammfilter als Chroma-Signal zu verwenden, sondern um dieses Additionssignal so weiterzuverarbeiten, daß zwar Übersprechstörungen kompensiert bleiben, aber dennoch die genannten Farbflächenstörungen in vertikaler Richtung nicht auftreten.

Von Vorteil ist es, zusätzlich eine Sinuserzeugungsschaltung zu verwenden, die aus dem entstörten Signal ein Sinussignal mit der Periode des entstörten Signales erzeugt und dieses Signal als modifiziertes entstörtes Signal ausgibt. Es ist zu beachten, daß das entstörte Signal aufgrund der Pegelbegrenzung durch die Schwellenwertschaltung nur zerhackte Teilhalbwellen des Differenzsignales ausgibt. Durch die Sinuserzeugungsschaltung wird aus diesem zerhackten Signal wieder ein durchgehend sinusförmiges Signal erzeugt, um bei bestimmten Phasenbedingungen ein optimales Kompensieren mit dem Additionssignal zu erzielen.

Um das Additionssignal und das Differenzsignal optimal so in ihrer Phase aneinander anpassen zu können, daß sich bei bestimmten Phasenbedingungen optimales Auslöschen ergibt, ist es von Vorteil, einen Phasenschieber zum gegenseitigen Verschieben der Phasen der genannten beiden Signale zu verwenden.

KURZE BESCHREIBUNG DER FIGUREN

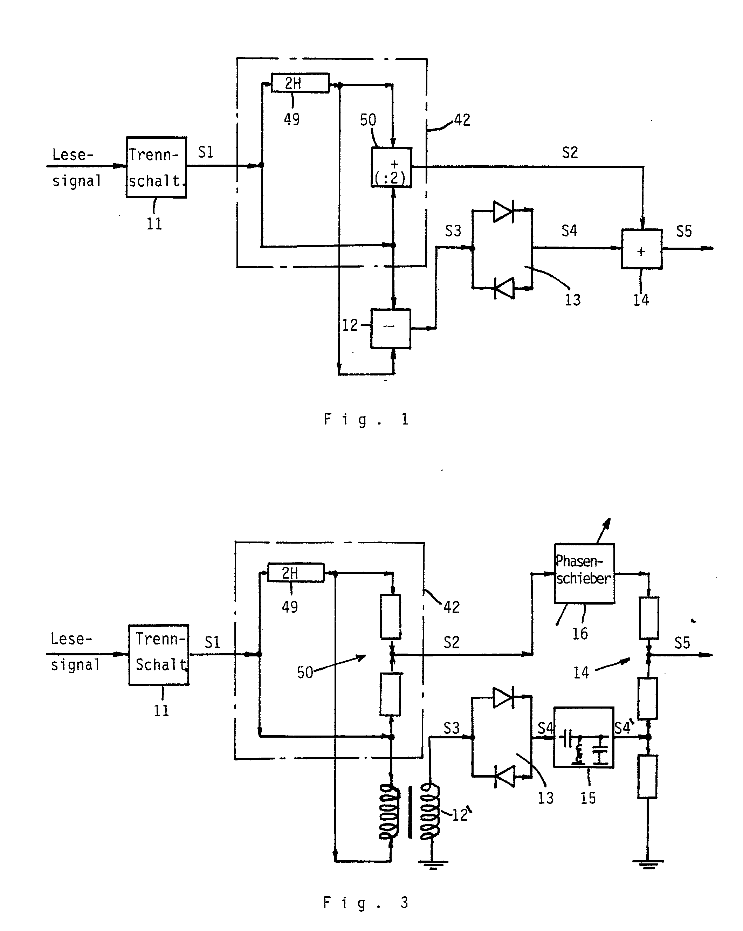

Fig. 1    Blockschaltbild einer Schaltung zum Rückgewinnen des Chroma-Signales aus einem Lesesignal, wobei Übersprechstörungen beseitigt werden, ohne daß es zu Farbfehlern in vertikaler Richtung kommt;

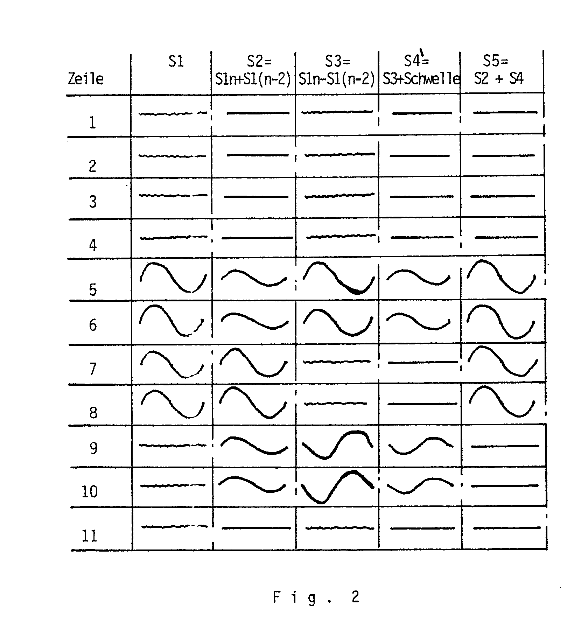

Fig. 2    Diagramm zum Erläutern der Funktion der Schaltung von Fig. 1;

Fig. 3    konkretes Ausführungsbeispiel der Schaltung gem. Fig. 1;

Fig. 4    Blockschaltbild einer bekannten Aufzeichnungsschaltung;

Fig. 5    Diagramm zum Erläutern der Phasenlage von Zeilensignalen, die mit der Aufzeichnungsschaltung gemäß Fig. 4 aufgezeichnet wurden;

Fig. 6    Blockschaltbild einer bekannten Schaltung zum Rückgewinnen des Chroma-Signales aus einem Lesesignal, wobei Übersprechstörungen beseitigt sind, jedoch Farbfehler in vertikaler Richtung auftreten;

Fig. 7 Diagramm zum Veranschaulichen eines Farbflecks auf einem im übrigen weißen Bildschirm;

Fig. 8 Diagramm zum Erläutern der zeilenmäßigen Lage des in Fig. 7 dargestellten Flecks; und

Fig. 9 Diagramm zum Erläutern, wie der Fleck mit der tatsächlichen Lage gemäß Fig. 8 wiedergegeben wird, wenn das Chroma-Signal mit der bekannten Schaltung gemäß Fig. 6 aus einem Lesesignal rückgewonnen wurde.

WEGE ZUM AUSFÜHREN DER ERFINDUNG

Die Schaltung gemäß Fig. 1 weist eine Trennschaltung 11 auf, der das von einem Wiedergabekopf gelesene Lesesignal zugeführt wird, und die ein Chroma-Rohsignal ausgibt. Die Trennschaltung 11 verfügt über die FM-Signalverarbeitungsschaltung 41, den Tiefpaß 48, den Mischer 33 mit Mischfrequenzschaltung 34 und den Hochpaß 32, wie anhand von Fig. 6 erläutert. Das Chroma-Rohsignal wird einem herkömmlichen Kammfilter 42 mit 2H-Verzögerungsleitung 49 und Addierglied 50 zugeführt, wie ebenfalls anhand von Fig. 6 erläutert. Das Chroma-Rohsignal ist mit S1 und das vom Addierglied 50 ausgegebene Additionssignal ist mit 52 bezeichnet. Das unverzögerte Chroma-Rohsignal S1, das verzögerte Chroma-Rohsignal vom 2H-Verzögerungsglied 49 und das Additionssignal S2 vom Addierglied 50 werden einer Schaltungsanordnung zugeführt, wie sie in Fig. 1 unterhalb einer strichpunktierten Linie dargestellt ist. Diese Schaltungsanordnung ist zusätzlich zu bekannten Schaltungskomponenten vorhanden.

Die unterhalb der strichpunktierten Linie in Fig. 1 dargestellte Schaltungsanordnung verfügt über ein Subtrahierglied 12, eine Schwellenwertschaltung 13 und ein zweites Addierglied 14. Das Subtrahierglied 12 erhält das verzögerte und das unverzögerte Chroma-Rohsignal und bildet aus diesen ein Differenzsignal S3. Letzteres wird der Schwellenwertschaltung zugeführt, die nur solche Pegelanteile des Differenzsignals durchläßt, die einen vorgegebenen Schwellenpegel überschreiten. Das durchgelassene Signal wird im folgenden als entstörtes Signal S4 bezeichnet. Dieses und das vom Addierglied 50 ausgegebene Additionssignal S2 werden vom zweiten Addierglied 14 zum Chroma-Signal S5 addiert.

Die Wirkung dieser Schaltung wird nun anhand von Fig. 2 erläutert.

In Fig. 2 sind die Signale S1 - S5 in fünf Kolonnen für jeweils 11 aufeinanderfolgende Zeilen eingezeichnet. Die Darstellung unterscheidet sich jedoch von der der Fig. 8 und 9. Bei letzteren sind die Farben rot und rosa durch unterschiedliche Schraffierungen angedeutet. In Fig. 2 ist eine der tatsächlichen Signalform entsprechende Darstellung gewählt. In jeder Zeile ist nämlich der Verlauf des Chroma-Signales dargestellt. Es kommt dabei auf Amplitude und Phase (in bezug auf das Burstsignal) an. Durch die Phase ist die Farbart festgelegt und durch die Amplitude die Farbintensität (nicht zu verwechseln mit der Farbhelligkeit, die z. B. durch die Summe der Strahlströme in einer Kathodenstrahlröhre bestimmt wird). Ein Chroma-Signal mit der Intensität 0 entspricht der Farbe weiß.

Die Chroma-Rohsignale S1 für die Zeilen 1 - 4 und 9 - 11 in Fig. 2 sollten gemäß dem eigentlichen Bildinhalt, wie er durch Fig. 8 veranschaulicht ist, den Pegel 0 aufweisen. Aufgrund verschiedener Übersprecheffekte liegt jedoch ein etwas verrauschtes Signal vor, was durch eine leichte Welligkeit der Chroma-Signale in den Zeilen 1 - 4 und 9 - 11 angedeutet ist. In den Zeilen 5 - 8 liegt jeweils ein nach Phase und Amplitude gleiches Chroma-Signal vor, das die Farbe "rot" repräsentieren soll.

Wird nun das Additionssignal S2 gebildet, ergeben sich die Chroma-Signale, wie sie in Fig. 2 für das Signal S2 für die Zeilen 1 - 11 dargestellt sind. In den Zeilen 1 - 4 liegt ein Chroma-Signal ohne Übersprechstörungen vor, da diese mit Hilfe der eingangs genannten Phasenverschiebemaßnahme und mit Hilfe des Kammfilters 42 beseitigt sind. In den Zeilen 5 und 6 sowie 9 und 10 liegen erniedrigte Amplituden bei unveränderter Phasenlage gegenüber dem Chroma-Signal "rot" vor. Das Chroma-Signal "rot" ist nur noch in den Zeilen 7 und 8 vorhanden. Es sei darauf hingewiesen, daß in Fig. 2 der Anschaulichkeit halber davon ausgegangen ist, daß das Addierglied 50 die Signale aus zwei Zeilen nicht nur addiert, sondern das Additionsergebnis auch noch hal biert, so daß das Additionssignal für Zeile 8, das aus den Chroma-Rohsignalen S1 für die Zeilen 8 und 6 gebildet wurde, dieselbe Amplitude aufweist, wie das Chroma-Rohsignal für Zeile 6 oder Zeile 8 im Ausgangsbild.

Was das Differenzsignal S3 betrifft, ist in den Fig. 1 und 2 davon ausgegangen, daß dieses dadurch gebildet wird, daß das jeweilige unverzögerte Chroma-Rohsignal vom jeweiligen 2H-verzögerten Chroma-Rohsignal abgezogen wird. Dies hat zur Folge, daß das Differenzsignal S3 für Zeile 5 mit dem Chroma-Rohsignal S1 für Zeile 5 nach Phase und Amplitude übereinstimmt, da vom letztgenannten Chroma-Rohsignal das Chroma-Rohsignal S1 für Zeile 3 abgezogen wurde, das nur Rauschpegel aufweist. Entsprechendes gilt für das Differenzsignal von Zeile 6. Die Differenzsignale für die Zeilen 7 und 8 weisen nur noch den Rauschpegel auf. Bei den Differenzsignalen S3 für die Zeilen 9 und 10 ist aufgrund der genannten Subtraktionsrichtung die Phase gegenüber den ursprünglichen Chroma-Rohsignalen S1 für die Zeilen 7 bzw. 8 invertiert.

Durch die Schwellenwertschaltung 13 wird das entstörte Signal S4 erzeugt, dessen Amplitude geringer ist als diejenige des jeweils zugehörigen Differenzsignales S3. Bei der Darstellung von Fig. 2 ist davon ausgegangen, daß das entstörte Signal S4 durch einen Schwingkreis sinusgeformt ist, also nicht mehr die zerhackte Form aufweist, wie sie vorliegt, wenn ein sinusförmiges Signal eine Schwellenwertschaltung durchlaufen hat. Entscheidend für die Funktion der Schaltung ist, daß die Schwellenwertschaltung dafür sorgt, daß aus den verrauschten Chroma-Signalen für die Zeilen 1 - 4, 7 und 8 sowie 11 Chroma-Signale vom Pegel 0 gebildet werden.

Die letzte Spalte in Fig. 2 veranschaulicht das Ergebnis der vom zweiten Addierglied 14 vorgegebenen Addition des Additionssignales S2 und des entstörten Signales S4 zum Chroma-Signal S5.

Es ist unmittelbar ersichtlich, daß sich für die Zeilen 1 - 4 und 11 der Pegel 0 einstellt. In den Zeilen 5 und 6 werden zwei gleichphasige Wellen von jeweils halber "Rot"-Amplitude addiert, wodurch sich wieder das ursprüngliche Chroma-Signal für "rot" einstellt. Für die Zeilen 7 und 8 wird dasselbe Endergebnis durch Addieren des Pegels 0 zum bereits korrekten Chroma-Signal "rot" erhalten, wie er für die Zeilen 7 und 8 im Additionssignal S2 vorliegt. Was die Zeilen 9 und 10 anbetrifft, so heben sich für diese das Additionssignal S2 und das entstörte Signal S4 jeweils auf, da diese Signale dieselben Amplituden, jedoch zueinander inverse Phasen aufweisen. Es wird also jeweils ein Chroma-Signal vom Pegel 0 erhalten, entsprechend dem Chroma-Signal für das Originalbild für die Zeilen 9 und 10.

Beim Ausführungsbeispiel gemäß Fig. 3 ist das Addierglied 50 durch ein Widerstandsnetzwerk gebildet, ebenso wie das Addierglied 14. Als Subtraktionsglied dient ein Übertrager 12'. Zwischen der Schwellenwertschaltung 13, die durch entgegengeschaltete Dioden gebildet ist, und dem Widerstandsnetzwerk des zweiten Addierglieds 14 befindet sich eine Sinuserzeugungsschaltung 15 mit einem Schwingkreis. Dieser wird durch das entstörte Signal S4 zum Schwingen angeregt, wodurch er ein modifiziertes entstörtes Signal S4' ausgibt. Diese Sinuserzeugungsschaltung bringt zwei Vorteile mit sich. Der eine ist der, daß aus dem von der Schwellenwertschaltung 13 ausgegebenen zerhackten Sinussignal ein durchgehendes Sinussignal erzeugt wird, wie es erforderlich ist, um das Additionssignal S2 optimal in solchen Fällen kompensieren zu können, wie sie anhand der Zeilen 9 und 10 in Fig. 2 veranschaulicht sind. Der zweite Vorteil ist der, daß das Subtraktionssignal S3 durch Übersprechstörungen verrauscht ist, was auch für die von der Schwellenwertschaltung durchgelassenen Signalanteile gilt. Werden diese verrauschten Signalanteile nicht unmittelbar zum Erzeugen des Chroma-Signales verwendet, sondern werden sie dazu eingesetzt, die Sinuserzeugungsschaltung 15 zum Schwingen anzuregen, führt dies dazu, daß zum Herstellen des Chroma-Signales ein unverrauschtes modifiziertes entstörtes Signal S4' zur Verfügung steht.

Schließlich verfügt die Schaltung gemäß Fig. 3 noch über einen Phaseneinsteller 16. Dieser dient dazu, durch Schaltungsbauteile hervorgerufene Phasenverschiebungen rückgängig zu machen, um dadurch die Kompensation von Signalen zu gewährleisten, die um 180° in ihrer Phase gegeneinander verschoben sein sollen. Der Phasenschieber 16 kann auch zu einem zusätzlichen Invertieren der Phase des Additionssignales 2 verwendet werden, nämlich dann, wenn die Schaltung so aufgebaut ist, daß das Subtrahierglied nicht das 2H-verzögerte Signal vom unverzögerten abzieht, sondern umgekehrt. Es wird darauf hingewiesen, daß der Phasenschieber 16 an beliebiger Stelle in der Schaltung angeordnet sein kann, solange die Stelle nur so gewählt ist, daß die Phasen von Addiersignal S2 und modifiziertem entstörtem Signal S4' gegeneinander verschoben werden können.

Bei der vorstehenden Beschreibung wurde der Anschaulichkeit halber davon ausgegangen, daß ein farbiger Fleck, konkret ein roter, auf weißem Hintergrund wiedergegeben werden soll. In diesem Fall führen die Schaltungsmaßnahmen lediglich zu Amplitudenänderungen und Phaseninvertierungen. Ist dagegen ein farbiger Fleck auf farbigem Hintergrund wiederzugeben, kommt es auch zu Phasenverschiebungen. Diese fallen jedoch so aus, daß ebenfalls genau der anhand des roten Fleckes auf weißem Grund erläuterte Effekt erzielt wird, daß nämlich ein Farbfleck lagerichtig und ohne verwaschene vertikale Kanten originalgetreu wiedergegeben wird. Dies gilt nicht nur für ausgedehnte Flekke, sondern auch für einzelne farbige Zeilen.

In Fig. 3 ist der Phasenschieber 16 als einstellbares Bauteil dargestellt. Für eine jeweils vorliegende konkrete Schaltung steht jedoch fest, welche Phasenverschiebungen auftreten, so daß ein Phasenschieber verwendet werden kann, der einen durch die Schaltung vorgegebenen Phasenschiebewert kompensiert. Entsprechend wie die Phase für eine jeweils vorliegende konkrete Schaltung genau eingestellt werden kann, kann dies auch mit der Amplitude von Signalen erfolgen. Daher ist in Fig. 3 kein einstellbarer Widerstand eingezeichnet, sondern es ist angenommen, daß alle Widerstände so gewählt sind, daß sich die anhand von Fig. 2 erläuterten Kompensationseffekte einstellen. Die widerstandsmäßige Dimensionierung muß so sein, daß die Amplituden des Additionssignales und des am zweiten Addierglied 14 zu diesem addierten Signales an Übergängen "Weiß-Farbe" im wesentlichen gleich sind.

**Ansprüche**

1. Schaltung zum Rückgewinnen des Chroma-Signales aus einem Lesesignal, das von einem Band mit benachbarten Schrägspuren gelesen wird, mit

   - einer Schaltungsanordnung (11) zum Abtrennen eines Chroma-Rohsignales (S1) aus dem Lesesignal,
   - einem 2H-Verzögerungsglied (49), dem das Chroma-Rohsignal zugeführt wird, und das ein 2H-verzögertes Chroma-Rohsignal ausgibt,
   - und einem Addierglied (50) zum Addieren eines jeweiligen unverzögerten und jeweiligen 2H-verzögerten Chroma-Rohsignales, wodurch ein Additionssignal (S2) gebildet wird, **gekennzeichnet durch**
   - ein Subtrahierglied (12) zum Subtrahieren des jeweiligen unverzögerten und des jeweiligen 2H-verzögerten Chroma-Rohsignales voneinander, wodurch ein Differenzsignal (S3) gebildet wird,
   - eine Schwellenwertschaltung (13), die das Differenzsignal erhält und die nur solche Anteile desselben durchläßt, die einen vorgegebenen Schwellenpegel überschreiten, wodurch ein entstörtes Signal (S4) gebildet wird,
   - und ein zweites Addierglied (14) zum Addieren des Additionssignales (S2) und des entstörten Signales (S4), wodurch das Chroma-Signal (S5) gebildet wird,
   - wobei die Schaltung so dimensioniert ist, daß die Amplituden des Additionssignales und des Subtraktionssignales an Übergängen "Weiß-Farbe" im wesentlichen gleich sind.

2. Schaltung nach Anspruch 1, **gekennzeichnet durch**

   - eine Sinuserzeugungsschaltung (15), die aus dem entstörten Signal (S4) ein Sinussignal mit der Periode des entstörten Signales erzeugt und dieses Signal als modifiziertes entstörtes Signal (S4') ausgibt.

3. Schaltung nach Anspruch 1, **gekennzeichnet durch**

   - einen Phasenschieber (16) zum Verschieben der Phase des Additionssignales (S2) und des zu diesem im zweiten Addierglied (14) addierten Signales (S4; S4') gegeneinander.

F i g . 1

F i g . 3

F i g . 2

ZSig    SSig

Luminanzsignal-
verarbeitungsschaltung                    ～40

FBAS                                                                        zum Aufzeichnen

32                    33                    36

0°        270°

ZSig
SSig        Logik
                                    ～34

VCO                        F i g .  4

PLL                        (Stand der Technik)


ZSig    SSig

FM-Signal-                                                              BAS
verarbeitung
                            ～41

Lese-                                                    2H
signal        36          33          32          49

ZSig                                                        50          F
SSig                            ～34                                  42

F i g .  6  (Stand der Technik)

| Zeile Spur (Halb-bild) | 1 | 2 | 3 | 4 | 5 | |
|---|---|---|---|---|---|---|
| A | → | ↓ | ← | ↑ | → | ↓ |
| B | ↑ | ↑ | ↑ | ↑ | ↑ | ↑ |
| C | ← | ↑ | → | ↓ | ← | ↑ |
| D | ↓ | ↓ | ↓ | ↓ | ↓ | ↓ |
| E | → | ↓ | ← | ↑ | → | ↓ |

F i g . 5
(Stand der Technik)

10

F i g . 7
(Stand der Technik)

Zeile   Aufzeichnung von Spur B

1

2

3

4

5

6

7

8

9

10

11

F i g . 8
(Stand der Technik)

Zeile   Wiedergabe von Spur B

1

2

3

4

5

6

7

8

9

10

11

F i g . 9
(Stand der Technik)